# EUROPEAN PATENT APPLICATION

(11) **EP 4 155 890 A1**
(43) Date of publication of application: **29.03.2023**
(21) Application number: 20936329.0
(22) Date of filing: 10.12.2020
(51) Int. Cl.: G06F 3/0488

(54) **METHOD AND DEVICE FOR RESPONDING TO USER OPERATION**

(30) Priority: 21.05.2020 CN 202010438336
(71) Applicant: Beijing Dajia Internet Information Technology Co., Ltd., Beijing 100085 (CN)
(72) Inventor: YIN, Yong, Beijing 100085 (CN)
(74) Representative: Angerhausen, Christoph
(86) International application number: PCT/CN2020/135396
(87) International publication number: WO 2021/232760

(57) **Abstract**

A method and device for responding to an operation, a terminal and a storage medium. The method comprises: in response to a touch operation on a target element in a page, obtaining scrollable ancestor elements of the target element; in response to detecting the touch operation on the target element again, determining whether the scrollable ancestor elements are in a scrolling state; and on the basis that each scrollable ancestor element is not in the scrolling state, responding to a touch event corresponding to the target element. During the process above, all of the scrollable ancestor elements of the target element are obtained for the first touch operation, which avoids problems caused by the incomplete acquisition of ancestor elements. When all of the scrollable ancestor elements are not in the scrolling state, a response is made to the touch event of the target element, which prevents the false triggering of the touch event caused when higher-level scrollable ancestor elements are in the scrolling state, and significantly improves the use experience of the user.

## Description

### CROSS REFERENCE TO RELATED APPLICATIONS

The present application is based on and claim priority to Chinese Application No. 202010438336.1, filed with the China National Intellectual Property Administration on May 21, 2020, the entire content of which is incorporated herein by reference.

### TECHNICAL FIELD

The disclosure relates to a field of front-end interaction technologies, and particularly to a method and a device for responding to a user operation, a terminal and a storage medium.

### BACKGROUND

Fastclick is an open source tool developed by FTLabs, which is written in JavaScript language and may utilize a series of touch events (such as a touch start event, a touch end event and so on) on a terminal to realize a customized tap event (similar to a click event). However, there may be various problems when the tap event realized based on Fastclick is triggered, such that it is urgent to find an advanced method for responding to a user operation to improve user's experiences.

### SUMMARY

The disclosure provides a method and a device for responding to a user operation, a terminal and a storage medium, which aims to solve the problems mentioned in the background part and provides an advanced method for responding to a user operation to the user, so as to improve the user's experiences.

According to a first aspect of the embodiments of the disclosure, a method for responding to a user operation is provided. The method includes: marking a scrollable ancestor element of a target element in response to a touch operation for the target element in a page, in which the scrollable ancestor element of the target element is a superior element of the target element; and responding to a touch event corresponding to the target element based on a fact that no marked scrollable ancestor element is in a scrolling state in response to detecting the touch operation for the target element again.

According to a second aspect of the embodiments of the disclosure, a device for responding to a user operation is provided. The device includes: an obtaining module, configured to mark a scrollable ancestor element of a target element in response to a touch operation for the target element in a page, in which the scrollable ancestor element of the target element is a superior element of the target element; and a responding module, configured to respond to a touch event corresponding to the target element based on a fact that no marked scrollable ancestor element is in a scrolling state in response to detecting the touch operation for the target element again.

According to a third aspect of the embodiments of the disclosure, a terminal is provided, and includes: a processor; and a memory configured to store instructions executable by the processor; the processor is configured to perform operations of the method for responding to a user operation according to the first aspect of the present disclosure.

According to a fourth aspect of the embodiments of the disclosure, a non-transitory computer-readable storage medium is provided. When instructions stored in the storage medium are executed by a processor of a terminal, the terminal is caused to perform operations of the method for responding to a user operation according to the first aspect of the present disclosure.

With the method for responding to a user operation according to the present disclosure, problems in the related art caused by obtaining ancestor elements incompletely can be avoided, and a phenomena that the touch event corresponding to the target element is triggered mistakenly when a high-level scrollable ancestor element is in a scrolling state can be avoided, thus avoiding trouble brought by the mistaken trigger of the touch event to the user and improving significantly user's experiences.

It should be understood that, the above general descriptions and latter detailed descriptions are only illustrative and descriptive, and may not be a limitation of the disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 is a flowchart illustrating a method for responding to a user operation according to an embodiment;
FIG. 2 is a schematic diagram illustrating a structure of a page according to an embodiment;
FIG. 3 is a schematic diagram illustrating an event delivery direction according to an embodiment;
FIG. 4 is a schematic diagram illustrating a process of preventing a touch event from being triggered mistakenly according to an embodiment;
FIG. 5 is a schematic diagram illustrating a change of a position of a scrolling bar according to an embodiment;
FIG. 6 is a block diagram illustrating a device for responding to a user operation according to an embodiment; and
FIG. 7 is a block diagram illustrating a terminal according to an embodiment.

### DETAILED DESCRIPTION

In order to better understand the technical solution of the present disclosure by those skilled in the art, the technical solution in embodiments of the present disclosure will be described clearly and completely with reference to drawings.

It should be noted that terms, such as "first" and "second" and the like in the description and claims of the present disclosure, may be used solely to distinguish similar elements without necessarily requiring or implying a specific order or sequence. It should be understood that such terms may be exchanged in suitable situations, so that the embodiments of the present disclosure described herein may be implemented in an order other than that illustrated or described. The implementations described in the following exemplary embodiments do not represent all implementations consistent with the present disclosure. Rather, they are merely examples of apparatuses and methods consistent with some aspects of the present disclosure as detailed in the appended claims.

The present disclosure provides a method for responding to a user operation. The method may determine whether an element is a scrollable element comprehensively, and takes on all scrollable ancestor elements of a target element into consideration, such that a phenomena that a tap event is mistakenly triggered can be avoided effectively.

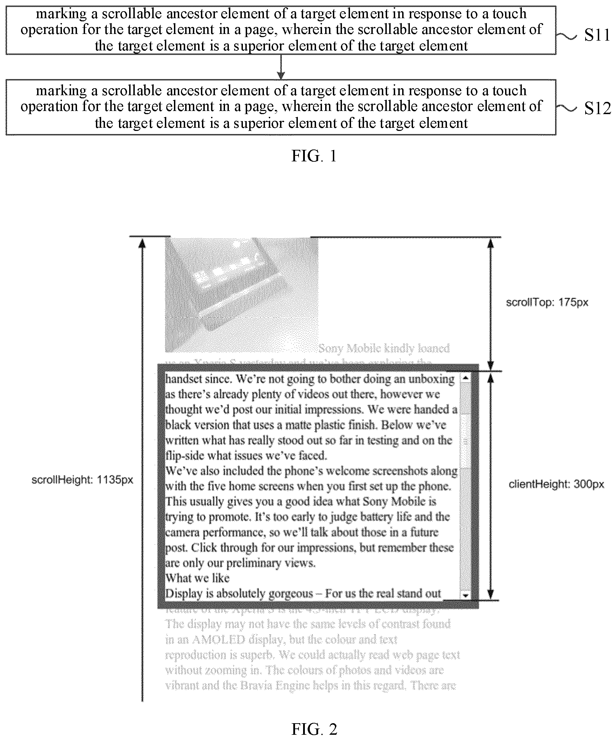

FIG. 1 is a flowchart illustrating a method for responding to a user operation according to an embodiment. With reference to FIG. 1, the method includes the following steps S11∼S12.

S 11, a scrollable ancestor element of a target element is obtained in response to a touch operation for the target element in a page. The scrollable ancestor element of the target element is a superior element of the target element.

In some embodiments, an excitation subject of the method may be any terminal supporting a touch screen function, such as a phone, and a specific type of the terminal is not limited. A user may use the terminal to browse webpages, and if the user touches a display screen of the terminal during the browsing, a page element corresponding to the touched area is considered as the target element. For example, the user touches a picture X in the page, then the picture X is considered as the target element corresponding to the touch operation. The target element may be a page element in any format, including text, image, table, linkage and so on, which is not limited herein.

In some embodiments, the target element may have an ancestor element, which is a superior element of the target element. For example, a block area 1 is defined in a webpage, an image area 2 is defined in the block area 1, a text box 3 is defined in the image area 2. For the text box 3, the ancestor element at least includes the image area 2 and the block area 1. When the block area 1 has ancestor elements, these ancestor elements are also ancestor elements of the text box 3. Regarding a definition of the ancestor element, reference can be made to the related art, which is not elaborated herein.

In some embodiments, the page element may include a scrollable element and a non-scrollable element. Determining whether a page element is a scrollable element may be performed based on a size relation between a client height and a scroll height of the page element, or a size relation between a client width and a scroll width of the page element. For example, when the client height of the page element is not greater than the scroll height, it indicates that the page element may be a scrollable element. A specific method of determining whether a page element is a scrollable element will be described in detail below.

At S 11, when determining the touch operation for the page from the user, a touch area of the user is determined, the target element in the touch area is obtained, and all ancestor elements of the target element are obtained, such that the scrollable ancestor element may be obtained from these ancestor elements.

S12, a response is made to a touch event corresponding to the target element bases on a fact that no marked scrollable ancestor element is in a scrolling state in response to detecting the touch operation for the target element again.

In some embodiments, in response to detecting the touch operation of the user for the first time, the scrollable ancestor element of the target element is obtained and no response is made to a tap event bound to the target element temporally. Another touch operation of the user is waited. If the touch operation for the target element is detected again within a predetermined time period, it is determined whether each scrollable ancestor element is in the scrolling state. If no touch operation is detected for the target element within the predetermined time period, a next touch operation detected beyond the predetermined time period is determined the touch operation detected for the first time, and the above procedure is repeated.

In some embodiments, after the user performs the touch operation for the first time, if a scrolling bar of the page is not dragged to change content displayed in the page, it can be determined that no element in the page is in the scrolling state. Instead, if the scrolling bar of the page is dragged to change the content displayed in the page, it can be determined that each element in the page is in the scrolling state. The present disclosure provides a specific method of determining whether an element in the page is in the scrolling state, which will be described in detail below.

In some embodiments, if no scrollable ancestor element is in the scrolling state, it indicates that the current page has no change, and the second touch operation is performed by the user with respect to the first touch operation, that is, the user performs a double clicking operation for the target element, such that a response should be made to the touch event corresponding to the target element. The touch event may be understood as the tap event.

For example, a user A browses a website XX through the phone and the display screen displays content in a page 1 of the website XX currently. The user is interested in an image 1 in the page 1 during the browsing, and wants to magnify the image 1 through a double clicking operation. When the user A performs a first touch operation for the image 1, the terminal may determine the image 1 as the target element and searches for all scrollable ancestor elements of the image 1. If the terminal receives a second touch operation performed by the user A for the image 1 within the predetermined time period, it determines whether any element of the scrollable ancestor elements is in the scrolling state. Otherwise, the terminal determines that the user A performs a double clicking operation for the image 1 and responds to the double clicking operation, such that a magnified image 1 is obtained and displayed in the display screen.

In some embodiments, when detecting the touch operation performed by the user for the target element in the page, all scrollable ancestor elements of the target element are obtained. When another touch operation performed by the user for the target element is detected, it is determined that whether each scrollable ancestor element is in the scrolling state, if no scrollable ancestor element is in the scrolling state, it is determined that the response is made to the touch event corresponding to the target element. In the above process, all the scrollable ancestor elements of the target element are obtained for the first touch operation of the user, problems in the related art caused by obtaining ancestor elements incompletely can be avoided. Further, when no scrollable ancestor element is in the scrolling state, it is determined that the response is made to the touch event corresponding to the target element, such that a phenomena that the touch event corresponding to the target element is triggered mistakenly when a high-level scrollable ancestor element is in the scrolling state can be avoided. Thus, the problem existing in Fastclick in the related art can be overcome, thus avoiding trouble brought by the mistaken trigger of the touch event to the user and improving significantly user's experiences.

In some embodiments, the present disclosure further provides a method of obtaining the scrollable ancestor element of the target element. The method may include: obtaining all vertical scrollable elements and horizontal scrollable elements in the page, in which the vertical scrollable elements and the horizontal scrollable elements comprise the scrollable ancestor element of the target element; and marking the scrollable ancestor element of the target element in the vertical scrollable elements and the horizontal scrollable elements.

In some embodiments, the elements in the page may include the vertical scrollable elements and horizontal scrollable elements. A single element may be both the vertical scrollable element and the horizontal scrollable element. When obtaining the scrollable ancestor element of the target element, all the vertical scrollable elements and horizontal scrollable elements in the page are obtained, and the scrollable ancestor element of the target element is screened out and marked from the vertical scrollable elements and horizontal scrollable elements.

In some embodiments, all ancestor elements of the target element can be obtained, elements each being scrollable in a vertical direction in the page (i.e., vertical scrollable elements) and elements each being scrollable in a horizontal direction in the page (i.e., horizontal scrollable elements) are screened out from the ancestor elements, and the screened out elements are considered as the scrollable ancestor elements and marked. A method of marking the scrollable ancestor element of the target element can be set according to actual needs, which is not limited herein.

In some elements, when obtaining the scrollable ancestor element of the target element, not only the vertical scrollable element is considered, but also the horizontal scrollable element is considered, such that the scrollable ancestor element may be obtained completely, thus further avoiding a mistaken trigger phenomena in the related art, and improving the user's experiences.

In some embodiment, the vertical scrollable elements and the horizontal scrollable elements in the page may be obtained by determining each element having a scroll height greater than a client height as the vertical scrollable element; obtaining the vertical scrollable elements; determining each element having a scroll width greater than a client width as the horizontal scrollable element; and obtaining the horizontal scrollable elements.

In some embodiments, the element having the scroll height greater than the client height is determined as the vertical scrollable element, and the element having the scroll width greater than the client width is determined as the horizontal scrollable element. Based on the above two rules, it may be determined whether an element is the vertical scrollable element or the horizontal scrollable element. FIG. 2 is a schematic diagram illustrating a structure of a page according to an embodiment. For example, in FIG. 2, the scroll height is 1135 px, and the client height is 300 px. The scroll height is greater than the client height, such that content in the block area is the vertical scrollable element.

In some embodiments, when the scrollable ancestor element of the target element is obtained, not only the vertical scrollable element is considered, but also the horizontal scrollable element is considered, such that the scrollable ancestor element may be obtained completely. However, in the related art, since only the vertical scrollable element is considered but neglecting the horizontal scrollable element, it cannot ensure that the response is made to the touch event corresponding to the target element when no scrollable ancestor element is in the scrolling state, which may cause a mistaken trigger of the touch event. The method for responding to a user operation according to the present disclosure may effectively avoid trouble brought by the mistaken trigger of the touch event to the user and improve significantly user's experiences.

In some embodiments, marking the scrollable ancestor element of the target element in response to the touch operation for the target element in the page may include adding a touch start event to the target element in response to the touch operation for the target element in the page; and obtaining the scrollable ancestor element of the target element in response to the touch start event and adding a touch end event to each scrollable ancestor element to mark each scrollable ancestor element.

In some embodiments, responding to the touch event corresponding to the target element based on the fact that no marked scrollable ancestor element is in the scrolling state in response to detecting the touch operation for the target element again may include obtaining a moving state of each marked scrollable ancestor element based on the touch end event in response to detecting the touch operation for the target element again; and responding to the touch event corresponding to the target element in response to the moving state indicating that no marked scrollable ancestor element is in the scrolling state.

In some embodiments, based on the Fastclick technology, when detecting the touch operation for the target element from the user, the touch start event is added to the target element (once the user's finger touches the target element, the adding of the touch start event is triggered, similar to a mouse down event in a desktop browser). The touch start event is executed to obtain all scrollable ancestor elements of the target element sequentially. The touch end event is added to each scrollable ancestor element to mark each scrollable ancestor element.

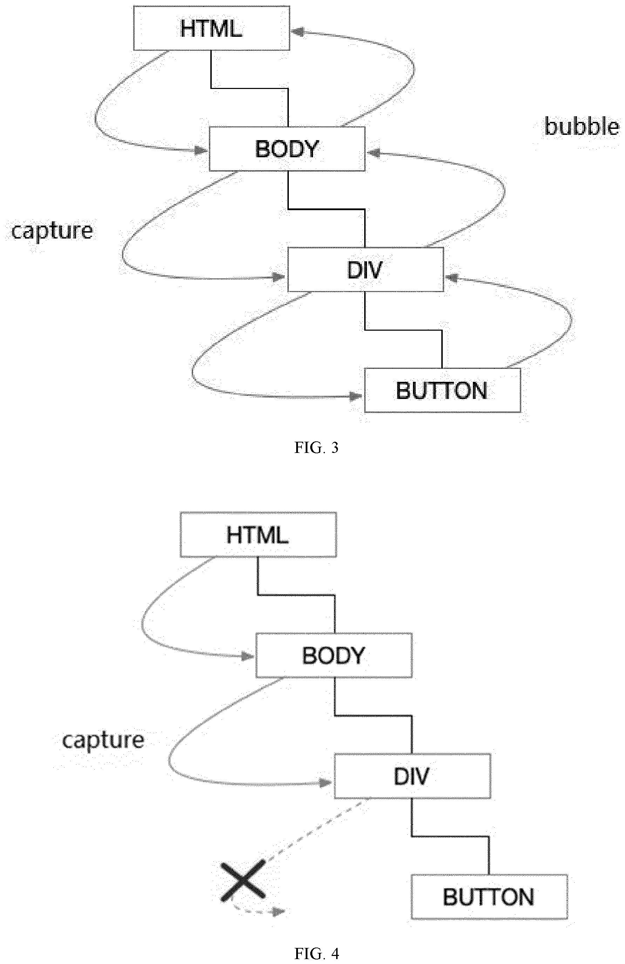

In some embodiments, when detecting the touch operation for the target element from the user, a capture phase starts. In an event model of a modern browser meeting the W3 C specifications, an event delivery is divided into a "capture phase" and a "bubble phase", as illustrated in FIG. 3. FIG. 3 is a schematic diagram illustrating an event delivery direction according to an embodiment. In FIG. 3, the "capture phase" refers to that the event is delivered downward from an HTML root element to the target element, that is, the event delivery direction is HTML, BODY, DIV and BUTTON (HTML refers to Hyper Text Markup Language, one HTML document corresponds to a webpage and the HTML can be used to describe the webpage, which may represent the whole HTML document herein. BODY is an HTML label, configured to define a body of the HTML document, which may represent a body part of the whole HTML document herein. DIV refers to division, which is an HTML label in the webpage, configured to provide structure and background for a large block of content in the HTML document, and may represent a certain area in the body part herein. BUTTON is an element in the HTML document, configured to create a button, which may represent a button in a certain area herein). The "bubble phase" refers to that the event is delivered upward from the target element to the HTML root element, that is, the event delivery direction is BUTTON, DIV, BODY and HTML. Regarding details, reference can be made to the related art, which is not elaborated herein. When the touch start event is executed, based on the downward direction from the HTML root element to the target element, the terminal obtains the scrollable ancestor element with the highest level, adds the touch end event to the scrollable ancestor element, and obtains all scrollable ancestor elements of the target element sequentially based on an order of levels from high to low, and adds the touch end event for each obtained scrollable ancestor element.

After the target end event is added to each scrollable ancestor element, a trigger of the touch end event is waited. When the touch operation for the target element from the user is detected again, the touch end event is triggered necessarily, and a trigger order is the same as the order of adding the touch end event, that is, respective scrollable ancestor elements are triggered sequentially in the order of levels of the scrollable ancestor elements from high to low. In detail, the touch end event of the scrollable ancestor element with the highest level is triggered, and the touch end event is executed, i.e., it is determined whether the scrollable ancestor element is in the scrolling state. If not, the touch end event of the scrollable ancestor element with the second highest level is triggered, and the touch end event is executed, i.e., it is determined whether the scrollable ancestor element is in the scrolling state. If not, it is determined whether other scrollable ancestor elements are in the scrolling state based on the same principle. If no marked scrollable ancestor element is in the scrolling state, the response is made to the touch event corresponding to the target element.

In some embodiments, for each scrollable ancestor element, the touch end event is added. When the touch operation for the target element from the user is detected again, by executing the touch end event, it may be determined whether the scrollable ancestor element is in the scrolling state, and when no scrollable ancestor element is in the scrolling state, it is determined that the response is made to the touch event, such that a phenomena that the touch event corresponding to the target element is triggered mistakenly when a high-level scrollable ancestor element is in the scrolling state can be avoided. Thus, the problem existing in Fastclick in the related art can be overcome, thus avoiding trouble brought by the mistaken trigger of the touch event to the user and improving significantly user's experiences.

In some embodiments, adding the touch end event to each scrollable ancestor element may include executing an event handing function in the touch start event to add the touch end event to each scrollable ancestor element, in which the event handling function is configured to add the touch end event to a page element, and the touch end event is triggered in response to listening to the touch operation for the target element.

In some embodiments, the AddEventListener in the API method of the HTML technology may be used to add the touch start event to the target element. In response to the touch start event, by executing the event handling function, the touch end event may be added to each scrollable ancestor element. Regarding the adding process, reference may be made to the foregoing description, which is not elaborated here. The event handling function is used to add the touch end event to the page element. The touch end event is triggered in response to listening to the touch operation for the target element. For example, in a case that the user performs an operation of magnifying an image X, when the user touches the image X for the first time, the touch start event is added to the image X, and event handling function in the touch start event is executed to add the touch end event to each scrollable ancestor element.

In some embodiments, obtaining the moving state of each marked scrollable ancestor element based on the touch end event in response to detecting the touch operation for the target element again may include sequentially obtaining the moving state of each marked scrollable ancestor element based on an order of levels of scrollable ancestor elements from high to low in response to the touch end event when the touch operation for the target element is detected again. In the embodiment, it should be understood that determining whether the scrollable ancestor element is in the scrolling state may include sequentially determining whether the scrollable ancestor element is in the scrolling state based on an order of levels of scrollable ancestor elements from high to low and terminating the determining after obtaining one scrollable ancestor element in the scrolling state.

In some embodiments, since the target end event is added to respective scrollable ancestor elements based on an order of levels from high to low during the capture phase, once the user performs the touch operation for the target element again, the touch end event is triggered necessarily, that is, the scrollable ancestor event may listen to the touch operation for the target element earlier than the target element. FIG. 4 is a schematic diagram illustrating a process of preventing a touch event from being triggered mistakenly according to an embodiment. In FIG. 4, the target element is BUTTON, the ancestor elements include HTML, BODY and DIV, and the scrollable ancestor element includes DIV (block element in the page). When the target end event of DIV listens to the touch operation for the target element from the user again, the downward delivering of the touch end event is forbidden if it is determined that DIV itself is in the scrolling state (for example, the cross in FIG. 4 indicates that DIV forbids BUTTON to receive the touch end event), such that the touch end even of BUTTON cannot listen to the touch operation for the target element from the user, thus blocking the trigger of the touch event. By blocking the trigger of the touch event for the target element at the high level in advance, a speed of the terminal responding to the user operation may be improved effectively.

In some embodiments, since the touch end event of the ancestor element may listen to the touch operation for the target element performed by the user for the second time earlier than the target element, if the ancestor element determines that the ancestor element itself is in the scrolling state, it may, in advance, prevent the target element from listening to the touch operation for the target element performed by the user for the second time, thus avoiding a phenomena that the touch event of the target element is triggered mistakenly. Further, the speed of the terminal responding to the user operation is accelerated, thus improving the user's experiences.

In some embodiments, the method for responding to a user operation may further include forbidding responding to the touch event corresponding to the target element based on a fact that one scrollable ancestor element is in the scrolling state, and adjusting the scrolling state to a suspended state simultaneously.

In some embodiments, when a scrollable ancestor element is in the scrolling state, in indicates that the user desires to perform a scroll pausing operation, rather than a touch event of the target element. In other words, if the user desires to perform the touch event of the target element, the user needs to touch the target element to pause the scrolling operation, and touches the target element again to implement the touch event of the target element. Thus, as long as one ancestor element of multiple scrollable ancestor elements is in the scrolling state, responding to the touch event corresponding to the target element is forbidden and the scrolling state of the ancestor element is adjusted to a suspended state simultaneously, so that the user may perform the touch operation subsequently.

In some embodiments, when determining that one ancestor element is in the scrolling state, responding to the touch event corresponding to the target element is forbidden, thus avoiding trouble brought by the mistaken trigger of the touch event to the user and improving significantly user's experiences.

In some embodiments, forbidding responding to the touch event corresponding to the target element may include obtaining the touch end event of the scrollable ancestor element in the scrolling state; and forbidding delivering the touch end event.

In some embodiments, once one ancestor element in the plurality of scrollable ancestor elements is determined to be the scrolling state, a StopPropagation method is called of the event object to forbid delivering the touch end event, such that the scrollable ancestor element at the lower level cannot listen to the touch operation for the target element performed by the user for the second time, and thus a complete touch event cannot formed on the target element.

In some embodiments, after forbidding responding to the touch event corresponding to the target element, the method for responding to a user operation of the disclosure may further include blocking the touch end event of the scrollable ancestor element from listening to a target touch operation, in which the target touch operation is the touch operation for the target element.

In some embodiments, the touch end event is configured to listen to the touch operation for the target element from the user, i.e., the target touch operation. If it is required to terminate listening of the target touch operation by the touch end event, a method of removing event listening is adopted. In detail, when the touch end event of one ancestor element listens to the target touch operation, the delivery of the touch end event should be forbidden, so as to block the touch end event of the scrollable ancestor element at the lower level from listening to the target touch operation. In this case, the RemoveEventListener method of each scrollable ancestor element is called to terminate the listening of the target touch operation by the corresponding touch end event, thus avoiding a next mistaken trigger of the touch event.

In some embodiments, after obtaining the scrollable ancestor element of the target element, the method may further include recording an initial position of a scrolling bar of each scrollable ancestor element.

Responding to the touch event corresponding to the target element based on the fact that no marked scrollable ancestor element is in the scrolling state in response to detecting the touch operation for the target element again includes determining that no marked scrollable ancestor element is in the scrolling state based on a fact that a present position of the scrolling bar is the same as the initial position in response to detecting the touch operation for the target element again; and responding to the touch event corresponding to the target element.

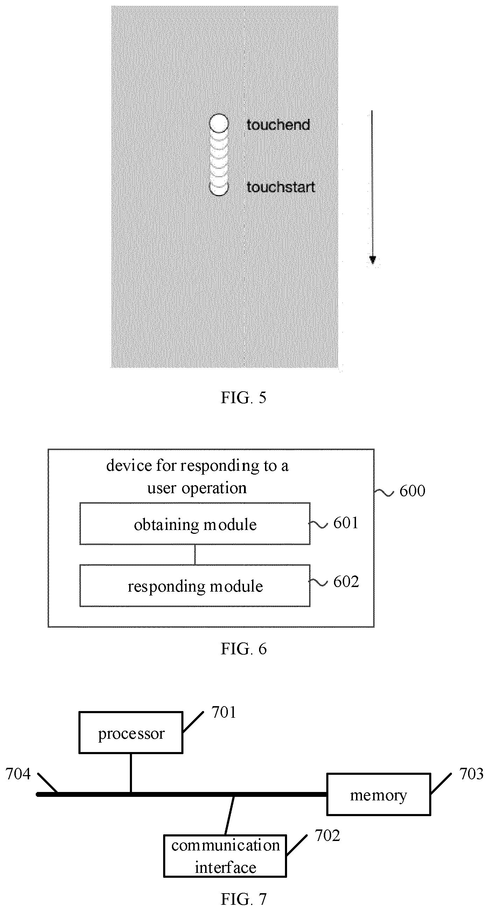

In the embodiment, a principle of determining whether a current ancestor element is in the scrolling state is described as follows. The position of the scrolling bar (ScrollTop, as illustrated in FIG. 2) of the current ancestor element is obtained and it is determined whether the position changes with respect to the position of the scrolling bar recorded when the user touches for the first time. Once the position of the scrolling bar of one ancestor element changes, it may be determined that the ancestor element is in the scrolling state. FIG. 5 is a schematic diagram illustrating a change of a position of a scrolling bar according to an embodiment. In FIG. 5, the position of the scrolling bar when the user touches for the first time is different from that when the user touches for the second time, such that it may be determined that the corresponding ancestor element is in the scrolling state.

In some embodiments, if one ancestor element not only can scroll in the vertical direction but also can scroll in the horizontal direction, the positions of the scrolling bar in the vertical direction and in the horizontal direction are recorded when the user touches for the first time. Also, when the user touches for the second time, it is determined whether the position of the scrolling bar in the vertical direction is different from the position of the scrolling bar in the vertical direction recorded when the user touches for the first time, if not, it is determined that the ancestor element is in the scrolling state in the vertical direction, if yes, it is determined whether the position of the scrolling bar in the horizontal direction is different from the position of the scrolling bar in the horizontal direction recorded when the user touches for the first time, if no, it is determined that the ancestor element is in the scrolling state in the horizontal direction.

With the method for responding to a user operation according to the disclosure, on one hand, for the element scrolling in the horizontal direction and the element scrolling in the vertical direction, the mistaken trigger of the touch event of each child element of the scrolling element can be avoided, on the other hand, the time of responding to the user operation may be shortened significantly, thus improving the user's experiences.

FIG. 6 is a block diagram illustrating a device for responding to a user operation according to an embodiment. As illustrated in FIG. 6, the device includes an obtaining module 601 and a responding module 602.

The obtaining module 601 is configured to mark a scrollable ancestor element of a target element in response to a touch operation for the target element in a page, in which the scrollable ancestor element of the target element is a superior element of the target element.

The responding module 602 is configured to respond to a touch event corresponding to the target element based on a fact that no marked scrollable ancestor element is in a scrolling state in response to detecting the touch operation for the target element again.

Alternatively, the obtaining module 601 includes a first adding module and a second adding module.

The first adding module is configured to add a touch start event to the target element in response to the touch operation for the target element in the page.

The second adding module is configured to obtain the scrollable ancestor element of the target element in response to the touch start event and to add a touch end event to each scrollable ancestor element to mark each scrollable ancestor element.

The responding module 602 includes a first responding sub-module and a second responding sub-module.

The first responding sub-module is configured to obtain a moving state of each marked scrollable ancestor element in response to the touch end event when the touch operation for the target element is detected again.

The second responding sub-module is configured to respond to the touch event corresponding to the target element in response to the moving state indicating that no marked scrollable ancestor element is in the scrolling state.

Alternatively, the second adding module includes an executing module, configured to execute an event handing function in the touch start event to add the touch end event to each scrollable ancestor element, in which the event handling function is configured to add the touch end event to a page element, and the touch end event is triggered in response to listening to the touch operation for the target element.

Alternatively, the device 600 further includes an adjusting module, configured to forbid responding to the touch event corresponding to the target element based on a fact that one scrollable ancestor element is in the scrolling state, and to adjust the scrolling state to a suspended state simultaneously.

Alternatively, the adjusting module includes a first obtaining sub-module and a forbidding module.

The first obtaining sub-module is configured to obtain the touch end event of the scrollable ancestor element in the scrolling state.

The forbidding module is configured to forbid delivering the touch end event.

Alternatively, the device 600 further includes a blocking module, configured to block the touch end event of the scrollable ancestor element from listening to a target touch operation, in which the target touch operation is the touch operation for the target element.

Alternatively, the obtaining module 601 includes a second obtaining sub-module and a marking sub-module.

The second obtaining sub-module is configured to obtain all vertical scrollable elements and horizontal scrollable elements in the page, in which the vertical scrollable elements and the horizontal scrollable elements include the scrollable ancestor element of the target element.

The marking sub-module is configured to mark the scrollable ancestor element of the target element in the vertical scrollable elements and the horizontal scrollable elements.

Alternatively, the second obtaining sub-module includes a first determining sub-module, a third obtaining sub-module, a second determining sub-module and a fourth obtaining sub-module.

The first determining sub-module is configured to determine each element having a scroll height greater than a client height as the vertical scrollable element.

The third obtaining sub-module is configured to obtain the vertical scrollable elements.

The second determining sub-module is configured to determine each element having a scroll width greater than a client width as the horizontal scrollable element.

The fourth obtaining sub-module is configured to obtain the horizontal scrollable elements.

Alternatively, the device 600 further includes a recording module, configured to record an initial position of a scrolling bar of each scrollable ancestor element.

The responding module includes a third determining sub-module and a third responding sub-module.

The third determining sub-module is configured to determine that no marked scrollable ancestor element is in the scrolling state based on a fact that a present position of the scrolling bar is the same as the initial position in response to detecting the touch operation for the target element again.

The third responding sub-module is configured to respond to the touch event corresponding to the target element.

Alternatively, the first responding sub-module includes a fifth obtaining sub-module, configured to sequentially obtain the moving state of each marked scrollable ancestor element based on an order of a level of the scrollable ancestor element from high to low in response to the touch end event when the touch operation for the target element is detected again.

FIG. 7 is a block diagram illustrating a terminal according to an embodiment. Embodiments of the disclosure further provide a terminal. As illustrated in FIG. 7, the terminal includes a processor 701, a communication interface 702, a memory 703 and a communication bus 704. The processor 701, the communication interface 702, the memory 703 realize communications therebetween via the communication bus 704.

The memory 703 is configured to store computer programs.

The processor 701 is configured to execute the computer programs stored on the memory 703 to perform: obtaining a scrollable ancestor element of a target element in response to a touch operation for the target element in a page; determining whether the scrollable ancestor element is in a scrolling state in response to detecting the touch operation for the target element again; and responding to a touch event corresponding to the target element based on a fact that no scrollable ancestor element is in the scrolling state.

Alternatively, the processor 701 may be configured to perform the steps in other method embodiments when executing the computer programs stored on the memory 703.

The communication bus in the terminal mentioned above may be a peripheral component interconnect (PCI) bus, or an extended industry standard architecture (EISA) bus and so on. The communication bus may be divided into an address bus, a data bus, a control bus and so on. For ease of description, the bus is indicated by a thick line in FIG. 7, but it does not indicate that there is only one bus or one type of bus.

The communication interface is configured to conduct communication between the terminal and other devices.

The memory may include a random access memory (RAM), also include a nonvolatile memory, for example at least one disc memory. Alternatively, the memory may be at least one storage device far away from the above processor.

The above processor may be a general processor, including a central processing unit (CPU), a network processor (NP), a digital signal processing (DSP), an application specific integrated circuit (ASIC), a field-programmable gate array (FPGA) or other programmable logic devices, a discrete gate or transistor logic device, a discrete hardware component.

In another embodiment of the disclosure, a computer-readable storage medium is provided. The computer-readable storage medium has instructions stored therein. When the instructions are running on a computer, the computer is caused to perform the method for responding to a user operation according to any above embodiment.

For the device embodiments, since they are similar to the method embodiments, there are not described in detail. Parts not described in the device embodiments may refer to relative descriptions in method embodiments.

In above embodiments, each embodiment may be described with focusing on different aspects. Parts not described in some embodiments may refer to relative descriptions in other embodiments.

It should be understood that the embodiments of the disclosure may provide a method, a device, or a computer program product. The embodiments of the disclosure may be in the form of completely hardware embodiments, completely software embodiments, or a combination of hardware embodiments and software embodiments. Further, the present embodiments may be in the form of the computer program product implemented on the computer available storage medium including computer available program codes (including but not limited to, disc memory, CD-ROM, optical memory and so on).

The present embodiments are described with reference to the flow chart and the block diagram of the method, the terminal (system), and the computer program product of the present embodiments. It should be understood that each process in the flow chart and/or each block in the block diagram, and a combination of the process and/or block in the flow chart and/or the block diagram can be implemented by the computer program instructions. The computer program instructions can be provided to a general computer, a dedicated computer, an embedded processor or processors of other programmable data processing terminals to generate a machine, so that a device for implementing the functions specified in one or more processes of the flow chart and/or one or more blocks in the block diagram can be generated through the instructions executed by the computer and the processors of the other programmable data processing terminals.

These computer program instructions may also be stored in a computer-readable memory which is capable of guiding the computer or the other programmable data processing terminals to word in a specific manner, so that the instructions stored in the computer-readable memory may generate a manufactured product including an instruction device. The instruction device may implement the functions specified in one or more processes of the flow chart and/or one or more blocks in the block diagram.

These computer program instructions may also be loaded on the computer or other programmable data processing terminals, so that a series of operations can be executed on the computer or other programmable data processing terminals to realize the processing implemented by the computer, such that the instructions executed on the computer or other programmable data processing terminals may provide the steps for implementing functions specified in one or more processes of the flow chart and/or one or more blocks in the block diagram.

Although the preferred embodiments of the disclosure have been described, those skilled in the art can make additional changes and modifications to these embodiments once they learn the basic creative concept. Therefore, the appended claims are intended to be interpreted as including the preferred embodiments and all changes and modifications falling within the scope of the embodiments of the disclosure.

Finally, it should be noted that in the disclosure, relational terms, such as "first" and "second," "top" and "bottom," and the like, may be used solely to distinguish one entity or element from another entity or element without necessarily requiring or implying any physical or logical relationship or order between such entities or elements. The terms "comprises," "comprising," or any other variation thereof are intended to cover a non-exclusive inclusion, such that a process, method, article, or apparatus that comprises a list of elements does not include only those elements, but may include other elements not expressly listed or inherent to such process, method, article, or apparatus. In the specification, unless specified or limited otherwise, the element defined by the sentence "including a..." does not exclude the existence of other identical elements in the process, method, article or terminal device that includes the element.

The method and device for responding to a user operation, the terminal, and the storage medium provided by the disclosure are described in detail above. Specific examples are used in the disclosure to illustrate the principle and implementation of the present invention. The description of the above embodiments is only used to help understand the method and core idea of the disclosure. Also, for those of ordinary skill in the art, according to the idea of the disclosure, there will be changes in the specific implementation and the scope of application. In summary, contents of the description should not be construed as limiting the disclosure.

## Claims

1. A method for responding to a user operation, comprising:
marking a scrollable ancestor element of a target element in response to a touch operation for the target element in a page, wherein the scrollable ancestor element of the target element is a superior element of the target element; and
responding to a touch event corresponding to the target element based on a fact that no marked scrollable ancestor element is in a scrolling state in response to detecting the touch operation for the target element again.

2. The method of claim 1, wherein, marking the scrollable ancestor element of the target element comprises:
adding a touch start event to the target element in response to the touch operation for the target element in the page; and
obtaining the scrollable ancestor element of the target element in response to the touch start event and adding a touch end event to each scrollable ancestor element to mark each scrollable ancestor element.

3. The method of claim 2, wherein, responding to the touch event corresponding to the target element based on the fact that no marked scrollable ancestor element is in the scrolling state in response to detecting the touch operation for the target element again comprises:
obtaining a moving state of each marked scrollable ancestor element in response to the touch end event when the touch operation for the target element is detected again; and
responding to the touch event corresponding to the target element in response to the moving state indicating that no marked scrollable ancestor element is in the scrolling state.

4. The method of claim 2, wherein, adding the touch end event to each scrollable ancestor element comprises:
executing an event handing function in the touch start event to add the touch end event to each scrollable ancestor element, wherein the event handling function is configured to add the touch end event to a page element, and the touch end event is triggered in response to listening to the touch operation for the target element.

5. The method of claim 2, further comprising:
forbidding responding to the touch event corresponding to the target element based on a fact that one scrollable ancestor element is in the scrolling state, and adjusting the scrolling state to a suspended state simultaneously.

6. The method of claim 5, wherein, forbidding responding to the touch event corresponding to the target element comprises:
obtaining the touch end event of the scrollable ancestor element in the scrolling state; and
forbidding delivering the touch end event.

7. The method of claim 5, further comprising:
blocking the touch end event of the scrollable ancestor element from listening to a target touch operation, wherein the target touch operation is the touch operation for the target element.

8. The method of any of claims 1 to 76, wherein marking the scrollable ancestor element of the target element comprises:
obtaining all vertical scrollable elements and horizontal scrollable elements in the page, wherein the vertical scrollable elements and the horizontal scrollable elements comprise the scrollable ancestor element of the target element; and
marking the scrollable ancestor element of the target element in the vertical scrollable elements and the horizontal scrollable elements.

9. The method of claim 8, wherein, obtaining all vertical scrollable elements and horizontal scrollable elements in the page comprises:
determining each element having a scroll height greater than a client height as the vertical scrollable element;
obtaining the vertical scrollable elements;
determining each element having a scroll width greater than a client width as the horizontal scrollable element; and
obtaining the horizontal scrollable elements.

10. The method of claim 1, wherein, based on the obtained scrollable ancestor element of the target element, the method further comprises:
recording an initial position of a scrolling bar of each scrollable ancestor element;
determining that no marked scrollable ancestor element is in the scrolling state based on a fact that a present position of the scrolling bar is the same as the initial position in response to detecting the touch operation for the target element again; and
responding to the touch event corresponding to the target element.

11. The method of claim 2, wherein, obtaining the moving state of each marked scrollable ancestor element in response to the touch end event when the touch operation for the target element is detected again comprises:
sequentially obtaining the moving state of each marked scrollable ancestor element based on an order of a level of the scrollable ancestor element from high to low in response to the touch end event when the touch operation for the target element is detected again.

12. A device for responding to a user operation, comprising:
an obtaining module, configured to mark a scrollable ancestor element of a target element in response to a touch operation for the target element in a page, wherein the scrollable ancestor element of the target element is a superior element of the target element; and
a responding module, configured to respond to a touch event corresponding to the target element based on a fact that no marked scrollable ancestor element is in a scrolling state in response to detecting the touch operation for the target element again.

13. The device of claim 11, wherein, the obtaining module comprises:
a first adding module, configured to add a touch start event to the target element in response to the touch operation for the target element in the page; and
a second adding module, configured to obtain the scrollable ancestor element of the target element in response to the touch start event and to add a touch end event to each scrollable ancestor element to mark each scrollable ancestor element.

14. The device of claim 13, wherein, the responding module comprises:
a first responding sub-module, configured to obtain a moving state of each marked scrollable ancestor element in response to the touch end event when the touch operation for the target element is detected again; and
a second responding sub-module, configured to respond to the touch event corresponding to the target element in response to the moving state indicating that no marked scrollable ancestor element is in the scrolling state.

15. The device of claim 13, wherein, the second adding module comprises:
an executing module, configured to execute an event handing function in the touch start event to add the touch end event to each scrollable ancestor element, wherein the event handling function is configured to add the touch end event to a page element, and the touch end event is triggered in response to listening to the touch operation for the target element.

16. The device of claim 13, further comprising:
an adjusting module, configured to forbid responding to the touch event corresponding to the target element based on a fact that one scrollable ancestor element is in the scrolling state, and to adjust the scrolling state to a suspended state simultaneously.

17. The device of claim 16, wherein, the adjusting module comprises:
a first obtaining sub-module, configured to obtain the touch end event of the scrollable ancestor element in the scrolling state; and
a forbidding module, configured to forbid delivering the touch end event.

18. The device of claim 16, further comprising:
a blocking module, configured to block the touch end event of the scrollable ancestor element from listening to a target touch operation, wherein the target touch operation is the touch operation for the target element.

19. The device of any of claims 12-18, wherein, the obtaining module comprises:
a second obtaining sub-module, configured to obtain all vertical scrollable elements and horizontal scrollable elements in the page, wherein the vertical scrollable elements and the horizontal scrollable elements comprise the scrollable ancestor element of the target element; and
a marking sub-module, configured to mark the scrollable ancestor element of the target element in the vertical scrollable elements and the horizontal scrollable elements.

20. The device of claim 19, wherein, the second obtaining sub-module comprises:
a first determining sub-module, configured to determine each element having a scroll height greater than a client height as the vertical scrollable element;
a third obtaining sub-module, configured to obtain the vertical scrollable elements;
a second determining sub-module, configured to determine each element having a scroll width greater than a client width as the horizontal scrollable element; and
a fourth obtaining sub-module, configured to obtain the horizontal scrollable elements.

21. The device of claim 12, further comprising:
a recording module, configured to record an initial position of a scrolling bar of each scrollable ancestor element;
wherein the responding module comprises:
a third determining sub-module, configured to determine that no marked scrollable ancestor element is in the scrolling state based on a fact that a present position of the scrolling bar is the same as the initial position in response to detecting the touch operation for the target element again; and
a third responding sub-module, configured to respond to the touch event corresponding to the target element.

22. The device of claim 13, wherein, the first responding sub-module comprises:
a fifth obtaining sub-module, configured to sequentially obtain the moving state of each marked scrollable ancestor element based on an order of a level of the scrollable ancestor element from high to low in response to the touch end event when the touch operation for the target element is detected again.

23. A terminal, comprising:
a processor; and
a memory configured to store instructions executable by the processor;
wherein, the processor is configured to perform:
marking a scrollable ancestor element of a target element in response to a touch operation for the target element in a page, wherein the scrollable ancestor element of the target element is a superior element of the target element; and
responding to a touch event corresponding to the target element based on a fact that no marked scrollable ancestor element is in a scrolling state in response to detecting the touch operation for the target element again.

24. A non-transitory computer-readable storage medium, wherein when instructions stored in the storage medium are executed by a processor of a terminal, the terminal is caused to perform:
marking a scrollable ancestor element of a target element in response to a touch operation for the target element in a page, wherein the scrollable ancestor element of the target element is a superior element of the target element; and
responding to a touch event corresponding to the target element based on a fact that no marked scrollable ancestor element is in a scrolling state in response to detecting the touch operation for the target element again.
